# EUROPÄISCHE PATENTANMELDUNG

(11) **EP 3 637 345 A1**
(43) Veröffentlichungstag der Anmeldung: **15.04.2020**
(21) Anmeldenummer: 18199653.9
(22) Anmeldetag: 10.10.2018
(51) Int. Cl.: G06Q 20/38, H04L 9/32

(54) **VERKNÜPFUNG VON IDENTITÄTEN IN EINER VERTEILTEN DATENBANK**

(71) Anmelder: Siemens Aktiengesellschaft, 80333 München (DE)
(72) Erfinder: Aschauer, Dr. Hans, 81829 München (DE); Bogner, Andreas, 81829 München (DE); Dichtl, Dr. Markus, 80636 München (DE); Wenda, Ingo, 86156 Augsburg (DE)

(57) **Zusammenfassung**

Für einen Benutzer einer verteilten Datenbank (100), welcher eine erste Identität aufweist, werden Transaktionsdaten (120) einer Transaktion in der verteilten Datenbank (100) gespeichert. Die Transaktion verknüpft die erste Identität mit einer zweiten Identität.

## Beschreibung

Die vorliegende Offenbarung betrifft Verfahren, Vorrichtungen und Computerprogramme zur Bereitstellung bzw. Betrieb einer verteilten Datenbank.

Aus dem Stand der Technik sind das Dokument US 8,531,247 B2, das Dokument US 8,892,616 B2, das Dokument US 8,300,811 B2, das Dokument US 9,147,088 B2, das Dokument US 9584311 B2, das Dokument EP 2976707 B1, das Dokument EP 2 605 445 B1, das Dokument EP 2 870 565 A1, das Dokument EP 2 891 102 A1, das Dokument WO 2017137256 A1, das Dokument EP 2870565 B1, EP 2891266 B1, das Dokument EP 2961091 A1, das Dokument EP 2961093 A1, das Dokument EP 3028140 B1, das Dokument EP 2930610 B1, das Dokument EP 2940620 B1, das Dokument EP 2899714 A1, das Dokument EP 2981926 A0, das Dokument EP 3125492 B1, das Dokument EP17195125, das Dokument EP17211075, das Dokument EP18178316, das Dokument EP18156084, das Dokument EP18151345, das Dokument EP18167702, das Dokument EP18153594, das Dokument EP18162050, das Dokument EP18178498, das Dokument EP18152117, das Dokument EP18150133, das Dokument EP18169145, das Dokument EP17210647, das Dokument EP18150146, das Dokument EP18167486, das Dokument EP18168670, das Dokument EP18162049, das Dokument EP17203819, das Dokument EP18157168, das Dokument EP18169421, das Dokument EP17210253, das Dokument EP17205224, das Dokument EP18169269, das Dokument EP18169254, das Dokument EP17210288, das Dokument EP18153025, das Dokument EP17200614, das Dokument EP18156308, das Dokument EP17201758, das Dokument EP18156511, das Dokument EP18159485, das Dokument EP17203573, das Dokument EP 17175275, das Dokument EP17186826, das Dokument WO 2018069271 A1, das Dokument PCT/EP2017/082508, das Dokument EP17179823, das Dokument WO 2017050348 A1, das Dokument WO 2018068965 A1 und das Dokument US 8 843 761 B2 bekannt.

Eine verteilte Datenbank, mitunter auch als "Distributed Ledger" bezeichnet, nutzt typischerweise kryptographische Verfahren und Konsensusverfahren, um in der verteilten Datenbank abgelegte Informationen gegen Manipulation zu schützen. Eine solche verteilte Datenbank kann beispielsweise als Blockchain (bzw. Blockkette) implementiert sein. Die Technologie von Blockchains bzw. Distributed Ledgers wird derzeit in einer wachsenden Vielfalt von Anwendungsgebieten genutzt. Neben Anwendungen für dezentrale Bezahlsysteme (z. B. Bitcoin) werden z.B. in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Zur Absicherung von Transaktionen in der verteilten Datenbank ist es bekannt, die Identität eines Benutzers an einen öffentlichen kryptographischen Schlüssel zu binden. Durch Signatur mit einem zu diesem öffentlichen Schlüssel gehörigen privaten kryptographischen Schlüssel, der im Normalfall nur dem Benutzer zugänglich ist, kann der Benutzer nachweisen, dass eine Transaktion in der verteilten Datenbank tatsächlich von ihm veranlasst wurde.

Typischerweise werden in einer verteilten Datenbank die öffentlichen Schlüssel der Benutzer ohne weitere Metadaten durch die Benutzer selbst erzeugt und sind somit anonym bzw. pseudonym. Bei manchen Anwendungsfällen kann es jedoch erforderlich sein, dass die mit einer Transaktion verknüpfte Identität bekannt ist. Als industriell relevantes Beispiel sei etwa genannt, dass nicht alle Güter in alle Länder exportiert werden dürfen, so dass vor dem Abschluss eines Vertrages die Identität des Vertragspartners geprüft werden muss. Je nach Anwendungsszenario kann es also notwendig sein, sicherzustellen, dass ein öffentlicher Schlüssel, einer bestimmten natürlichen oder juristischen Person zugeordnet ist. Hierdurch kann beispielsweise ermöglicht werden, dass gegen diese natürliche oder juristische Person auch Ansprüche mit gerichtlichen Mitteln durchgesetzt werden können.

Zur Authentifizierung eines kryptographischen öffentlichen Schlüssels, z.B. eines öffentlichen Teils eines asymmetrischen Schlüsselpaares, ist es bekannt, eine so genannte Public-Key-Infrastruktur (PKI) zu nutzen, bei welcher die mit dem kryptographischen öffentlichen Schlüssel verknüpfte Identität, z.B. eine natürliche oder juristische Person, durch eine vertrauenswürdige Instanz bestätigt wird. Diese Bestätigung einer Identität kann z. B. durch ein Zertifikat erfolgen, das von der vertrauenswürdigen Instanz digital signiert ist. Hierbei ist erforderlich, dass die vertrauenswürdige Instanz sicherstellt, dass die verknüpfte Identität authentisch ist, z.B. anhand eines Ausweisdokuments. Diese Aufgabe kann jedoch von der vertrauenswürdigen Instanz auch an eine weitere Instanz delegiert werden, welche typischerweise als Registration Authority (RA) bezeichnet wird. Die RA überprüft lediglich die behauptete Authentizität der Identität und übergibt das
Ergebnis ihrer Überprüfung an eine als Certification Authority (CA) bezeichnete Instanz, die dann, wenn die Authentizität bestätigt wurde, durch Signatur des Zertifikats die Authentizität der Identität bestätigt. Im Zusammenhang mit einer verteilten Datenbank führt die dargestellte Nutzung einer PKI jedoch zu einer vergleichsweise hohen Komplexität, da z.B. neben der verteilten Datenbank auch Funktionen zur Verwaltung von Zertifikaten bereitgestellt werden müssen.

Es besteht daher ein Bedarf für Technologien, welche eine effiziente Nutzung einer verteilten Datenbank mit authentifizierten Benutzern ermöglicht. Eine der vorliegenden Offenbarung zu Grunde liegende Aufgabe besteht darin, diesem Bedarf gerecht zu werden.

Erfindungsgemäß wird diese Aufgabe durch eine Vorrichtung nach Anspruch 1, durch eine Vorrichtung nach Anspruch 4, durch ein Verfahren nach Anspruch 11, durch ein Verfahren nach Anspruch 13 und durch Computerprogramm nach Anspruch 15. Die abhängigen Ansprüche definieren weitere Ausführungsformen.

Gemäß einem Ausführungsbeispiel wird eine erste Vorrichtung zur Bereitstellung einer verteilten Datenbank offenbart. Die Vorrichtung kann beispielsweise einen Knoten eines verteilten Datenbanksystems implementieren. Die erste Vorrichtung ist ausgestaltet zum:
- für einen Benutzer der verteilten Datenbank, der eine erste Identität aufweist, Speichern von Transaktionsdaten einer Transaktion in der verteilten Datenbank, wobei die Transaktion die erste Identität mit einer zweiten Identität verknüpft.

Auf diese Weise kann erreicht werden, dass auf effiziente und manipulationssichere Weise die erste Identität mit der zweiten Identität verknüpft werden kann.

Bei einem Ausführungsbeispiel der ersten Vorrichtung umfasst die erste Identität einen öffentlichen kryptographischen Schlüssel, welcher zum Signieren einer Transaktion in der verteilten Datenbank nutzbar ist. Bei Veranlassung einer solchen Transaktion, können die Transaktionsdaten dieser Transaktion den öffentlichen kryptographischen Schlüssel, einen Hashwert des öffentlichen kryptographischen Schlüssels und/oder einen Identifikator des öffentlichen kryptographischen Schlüssels umfassen.

Bei einem Ausführungsbeispiel der ersten Vorrichtung ist die Transaktion zur Verknüpfung der Identitäten exklusiv durch einen oder mehrere als vertrauenswürdig eingestuften Benutzer der verteilten Datenbank veranlassbar. Auf diese Weise kann beispielsweise die Authentizität der zweiten Identität sichergestellt werden.

Gemäß einem Ausführungsbeispiel ist die erste Vorrichtung weiterhin ausgestaltet zum:
- Speichern von Transaktionsdaten wenigstens einer weiteren Transaktion in der verteilten Datenbank, wobei die weitere Transaktion die Verknüpfung der ersten Identität des Benutzers mit der zweiten Identität des Benutzers aufhebt. Auch die weitere Transaktion kann exklusiv durch einen oder mehrere als vertrauenswürdig eingestuften Benutzer der verteilten Datenbank veranlassbar sein, z.B. durch denselben Benutzer, welcher die Transaktion zur Verknüpfung der Identitäten veranlasst hat. Auf diese Weise kann auf effiziente und manipulationssichere Weise die zuvor erzeugte Verknüpfung der ersten und zweiten Identität wieder aufgehoben werden.

Die Wiederaufhebung der Verknüpfung der zwei Identitäten kann aus verschiedenen Gründen erforderlich oder sinnvoll sein. Teilweise kann dies dadurch begründet sein, dass eine juristische Beziehung beendet wurde. Dies kann etwa beim Ausscheiden eines Mitarbeiters aus einer Firma der Fall sein, oder wenn ein Kraftfahrzeug verkauft wird. Im letzteren Fall sollte es beispielsweise nicht möglich sein, dass durch das Kraftfahrzeug weiterhin Geschäfte veranlasst werden, die zu Lasten seines ehemaligen Eiggentümers gehen. Die Wiederaufhebung von Verknüpfungen der zwei Identitäten kann auch aus Sicherheitsgründen erforderlich sein, wenn beispielsweise Schlüsselmaterial kompromittiert wurde.

Bei einem Ausführungsbeispiel der ersten Vorrichtung ist der Benutzer über die zweite Identität außerhalb der verteilten Datenbank identifizierbar. Eine anonyme oder pseudonyme Nutzung der ersten Identität kann somit vermieden werden.

Bei einem Ausführungsbeispiel der ersten Vorrichtung umfasst die zweite Identität eine oder mehrere Informationen, welche den Benutzer als natürliche Person, juristische Person, Organisation, Maschine oder physikalisches Objekt identifizieren. Die Informationen können beispielsweise einen Namen, z.B. Personennamen, Organisationsnamen, Gerätenamen, Produktnamen oder Herstellernamen beinhalten. Weiterhin können solche Informationen auch anderweitige Kennzeichnungsinformationen, z.B. eine Produktnummer, oder Adressdaten umfassen. Der Benutzer kann somit über die zweite Identität zuverlässig identifiziert werden. Die Identifizierung als natürliche Person oder juristische Person kann beispielsweise auch eine Durchsetzung von Rechtsansprüchen ermöglichen. Dies kann z.B. vorteilhaft sein, wenn die erste Identität in einem Geschäftsvorgang zwischen dem Benutzer und einem weiteren Benutzer verwendet wird, z.B. um eine entsprechende Transaktion in der verteilten Datenbank zu signieren.

Gemäß einem weiteren Ausführungsbeispiel wird eine zweite Vorrichtung zur Bereitstellung einer verteilten Datenbank offenbart. Die Vorrichtung kann beispielsweise einen Knoten eines verteilten Datenbanksystems implementieren oder einen Zugang zu einem oder mehreren Knoten eines verteilten Datenbanksystems bereitstellen. Die zweite Vorrichtung ist ausgestaltet zum:
- für einen Benutzer der verteilten Datenbank, welcher eine erste Identität aufweist, Prüfen einer zweiten Identität; und
- Veranlassen einer Transaktion in der verteilten Datenbank, welche die erste Identität mit der zweiten Identität verknüpft.

Das Prüfen der zweiten Identität kann ein Bestätigen der Authentizität der zweiten Identität durch eine vertrauenswürdige Instanz, z.B. eine Registration Authority (RA) umfassen. Die zweite Vorrichtung kann über die verteilte Datenbank mit der vertrauenswürdigen Instanz interagieren oder als Teil der vertrauenswürdigen Instanz implementiert sein.

Bei einem Ausführungsbeispiel der zweiten Vorrichtung umfasst die erste Identität einen öffentlichen kryptographischen Schlüssel, welcher von dem Benutzer zum Signieren einer Transaktion in der verteilten Datenbank nutzbar ist.

Bei einem Ausführungsbeispiel der zweiten Vorrichtung ist der Benutzer über die zweite Identität außerhalb der verteilten Datenbank identifizierbar. Eine anonyme oder pseudonyme Nutzung der ersten Identität kann somit vermieden werden.

Bei einem Ausführungsbeispiel der zweiten Vorrichtung umfasst die zweite Identität eine oder mehrere Informationen, welcher den Benutzer als natürliche Person, juristische Person, Maschine oder physikalisches Objekt identifizieren. Die Informationen können beispielsweise einen Namen, z.B. Personennamen, Organisationsnamen, Gerätenamen, Produktnamen oder Herstellernamen beinhalten. Weiterhin können solche Informationen auch anderweitige Kennzeichnungsinformationen, z.B. eine Produktnummer, oder Adressdaten umfassen.. Der Benutzer kann somit über die zweite Identität zuverlässig identifiziert werden. Die Identifizierung als natürliche Person oder juristische Person kann beispielsweise auch eine Durchsetzung von Rechtsansprüchen ermöglichen. Dies kann z.B. vorteilhaft sein, wenn die erste Identität in einem Geschäftsvorgang zwischen dem Benutzer und einem weiteren Benutzer verwendet wird, z.B. um eine entsprechende Transaktion in der verteilten Datenbank zu signieren.

Bei einem Ausführungsbeispiel der zweiten Vorrichtung ist die Transaktion zur Verknüpfung der Identitäten exklusiv durch einen oder mehrere als vertrauenswürdig eingestuften Benutzer der verteilten Datenbank veranlassbar. Auf diese Weise kann beispielsweise die Authentizität der zweiten Identität sichergestellt werden.

Gemäß einem Ausführungsbeispiel ist die zweite Vorrichtung weiterhin ausgestaltet zum:
- Veranlassen einer weiteren Transaktion in der verteilten Datenbank, wobei die weitere Transaktion die Verknüpfung der ersten Identität mit der zweiten Identität aufhebt. Die weitere Transaktion kann ebenfalls exklusiv durch einen oder mehrere als vertrauenswürdig eingestuften Benutzer der verteilten Datenbank veranlassbar sein, z.B. durch denselben Benutzer, welcher die Transaktion zur Verknüpfung der Identitäten veranlasst hat. Auf diese Weise kann auf effiziente und manipulationssichere Weise die zuvor erzeugte Verknüpfung der ersten und zweiten Identität wieder aufgehoben werden.

Gemäß einem weiteren Ausführungsbeispiel wird ein erstes Verfahren bereitgestellt. Das erste Verfahren umfasst:
- für einen Benutzer einer verteilten Datenbank, welcher eine erste Identität aufweist, Speichern von Transaktionsdaten einer Transaktion in der verteilten Datenbank, wobei die Transaktion die erste Identität einer zweiten Identität verknüpft.

Bei einem Ausführungsbeispiel des ersten Verfahrens umfasst die erste Identität des Benutzers einen öffentlichen kryptographischen Schlüssel, welcher zum Signieren einer Transaktion in der verteilten Datenbank nutzbar ist. Bei Veranlassung einer solchen Transaktion, können die Transaktionsdaten dieser Transaktion den öffentlichen kryptographischen Schlüssel, einen Hashwert des öffentlichen kryptographischen Schlüssels und/oder einen Identifikator des öffentlichen kryptographischen Schlüssels umfassen.

Bei einem Ausführungsbeispiel des ersten Verfahrens ist die Transaktion zur Verknüpfung der Identitäten exklusiv durch einen oder mehrere als vertrauenswürdig eingestuften Benutzer der verteilten Datenbank veranlassbar. Auf diese Weise kann beispielsweise die Authentizität der zweiten Identität sichergestellt werden.

Bei einem Ausführungsbeispiel des ersten Verfahrens ist der Benutzer über zweite Identität außerhalb der verteilten Datenbank identifizierbar.

Bei einem Ausführungsbeispiel des ersten Verfahrens umfasst die zweite Identität eine oder mehrere Informationen, welcher den Benutzer als natürliche Person, juristische Person, Maschine oder physikalisches Objekt identifizieren. Die Informationen können beispielsweise einen Namen, z.B. Personennamen, Organisationsnamen, Gerätenamen, Produktnamen oder Herstellernamen beinhalten. Weiterhin können solche Informationen auch anderweitige Kennzeichnungsinformationen, z.B. eine Produktnummer, oder Adressdaten umfassen.

Gemäß einem Ausführungsbeispiel umfasst das erste Verfahren weiterhin:
- Speichern von weiteren Transaktionsdaten einer weiteren Transaktion in der verteilten Datenbank, wobei die weitere Transaktion die Verknüpfung der ersten Identität mit der zweiten Identität aufhebt.

Die weitere Transaktion kann ebenfalls exklusiv durch einen oder mehrere als vertrauenswürdig eingestuften Benutzer der verteilten Datenbank veranlassbar sein, z.B. durch denselben Benutzer, welcher die Transaktion zur Verknüpfung der Identitäten veranlasst hat.

Gemäß einem weiteren Ausführungsbeispiel wird ein zweites Verfahren bereitgestellt. Das zweite Verfahren umfasst:
- für einen Benutzer einer verteilten Datenbank, welcher eine erste Identität aufweist, Prüfen einer zweiten Identität; und
- Veranlassen einer Transaktion in der verteilten Datenbank, welche die erste Identität mit der zweiten Identität verknüpft.

Das Prüfen der zweiten Identität kann ein Bestätigen der Authentizität der zweiten Identität durch eine vertrauenswürdige Instanz, z.B. eine Registration Authority (RA) umfassen.

Bei einem Ausführungsbeispiel des zweiten Verfahrens umfasst die erste Identität des Benutzers einen zum Signieren der ersten Transaktion genutzten öffentlichen kryptographischen Schlüssel. Die ersten Transaktionsdaten können den öffentlichen kryptographischen Schlüssel, einen Hashwert des öffentlichen kryptographischen Schlüssels und/oder einen Identifikator des öffentlichen kryptographischen Schlüssels umfassen.

Bei einem Ausführungsbeispiel des zweiten Verfahrens ist der Benutzer über die zweite Identität außerhalb der verteilten Datenbank identifizierbar.

Bei einem Ausführungsbeispiel des zweiten Verfahrens umfasst die zweite Identität eine oder mehrere Informationen, welcher den Benutzer als natürliche Person, juristische Person, Organisation, Maschine oder physikalisches Objekt identifizieren. Die Informationen können beispielsweise einen Namen, z.B. Personennamen, Organisationsnamen, Gerätenamen, Produktnamen oder Herstellernamen beinhalten. Weiterhin können solche Informationen auch anderweitige Kennzeichnungsinformationen, z.B. eine Produktnummer, oder Adressdaten umfassen.

Bei einem Ausführungsbeispiel des zweiten Verfahrens ist die Transaktion zur Verknüpfung der Identitäten exklusiv durch einen oder mehrere als vertrauenswürdig eingestuften Benutzer der verteilten Datenbank veranlassbar.

Gemäß einem Ausführungsbeispiel umfasst das zweite Verfahren weiterhin:
- Veranlassen einer weiteren Transaktion in der verteilten Datenbank, wobei die weitere Transaktion die Verknüpfung der ersten Identität mit der zweiten Identität aufhebt.

Die weitere Transaktion kann ebenfalls exklusiv durch einen oder mehrere als vertrauenswürdig eingestuften Benutzer der verteilten Datenbank veranlassbar sein, z.B. durch denselben Benutzer, welcher die Transaktion zur Verknüpfung der Identitäten veranlasst hat.

Gemäß einem weiteren Ausführungsbeispiel wird ein Computerprogramm bzw. Computerprogrammprodukt bereitgestellt, z.B. in Form eines maschinenlesbaren Datenträgers wie eine CD, eine DVD, ein Magnetband, eine Festplatte oder ein USB-Stick, welches Programmcode umfasst der bei Ausführung durch einen oder mehrere Prozessoren einer programmierbaren Vorrichtung bewirkt, dass die Vorrichtung das erste Verfahren und/oder zweite Verfahren gemäß einem der oben genannten Ausführungsbeispiele ausführt. Bei dem Programmcode kann es sich um einen Quellcode (z.B. in einer Programmiersprache wie C oder C++), der noch compiliert und gebunden oder interpretiert werden muss, oder um einen ausführbaren Programmcode handeln.

Bei den genannten Ausführungsbeispielen kann es sich bei dem Benutzer um eine Entität handeln, zu welcher Informationen in der verteilten Datenbank gespeichert werden. Beispiele für eine solche Entität sind: eine natürliche Person, eine juristische Person, eine Maschine, z.B. ein IoT-Gerät (IoT: "Internet of Things" bzw. Internet der Dinge), oder ein physikalisches Objekt, z.B. ein Produkt.

Bei den genannten Ausführungsbeispielen ermöglicht die Nutzung der verteilten Datenbank, welche beispielsweise als Blockchain implementiert sein kann, dass die Verknüpfung der ersten Identität mit der zweiten Identität auf effiziente Weise mit hoher Integrität gespeichert und für andere Benutzer der verteilten Datenbank zugänglich ist, ohne dass hierzu eine gesonderte PKI-Infrastruktur erforderlich ist.

Mit der verteilten Datenbank können die Transaktionsdaten in verschiedenen Knoten eines verteilten Datenbanksystems gespeichert werden, die räumlich voneinander getrennt sein können. Die Knoten des verteilten Datenbanksystems können die Transaktionsdaten gegeneinander abgleichen, so dass gewährleistet ist, dass die Transaktionsdaten in verschiedenen Knoten der verteilten Datenbank redundant gespeichert sind. Eine Manipulation eines einzelnen Knotens oder einiger weniger Knoten der verteilten Datenbank kann somit über den Abgleich zwischen den Knoten zuverlässig erkannt werden. Eine etwaige über den Abgleich erkannte Abweichung der Transaktionsdaten zwischen zwei Knoten kann auch über den Abgleich korrigiert werden.

Im Folgenden werden Ausführungsbeispiele der vorliegenden Erfindung unter Bezugnahme auf die beigefügten Figuren näher erläutert.
Fig. 1 veranschaulicht schematisch eine verteilte Datenbank gemäß einem Ausführungsbeispiel.
Fig. 2 zeigt schematisch ein verteiltes Datenbanksystem gemäß einem Ausführungsbeispiel.
Fig. 3 zeigt ein Flussdiagramm zur Veranschaulichung eines Verfahrens gemäß einem Ausführungsbeispiel.
Fig. 4 zeigt ein Flussdiagramm zur Veranschaulichung eines weiteren Verfahrens gemäß einem Ausführungsbeispiel.

Bei der nachfolgenden Beschreibung von Ausführungsbeispielen versteht es sich, dass die beigefügten Zeichnungen als schematisch anzusehen sind, und dass die Zeichnungen und dargestellten Elemente nicht notwendigerweise maßstabsgerecht sind. Vielmehr sollen durch die Zeichnungen Funktionen und Zusammenwirken von Elementen und Komponenten veranschaulicht werden. Hierbei versteht es sich auch, dass jegliche Verbindung oder Kopplung von dargestellten funktionalen Blöcken, Vorrichtungen, Komponenten oder anderweitigen physischen oder funktionalen Elementen auch durch eine indirekte Verbindung oder Kopplung, z.B. über ein oder mehrere Zwischenelemente, implementiert sein könnte. Eine Verbindung zwischen Komponenten kann beispielweise über eine drahtgebundene und/oder drahtlose Datenverbindung implementiert sein. Funktionale Blöcke können durch Hardware, Firmware und/oder Software implementiert sein.

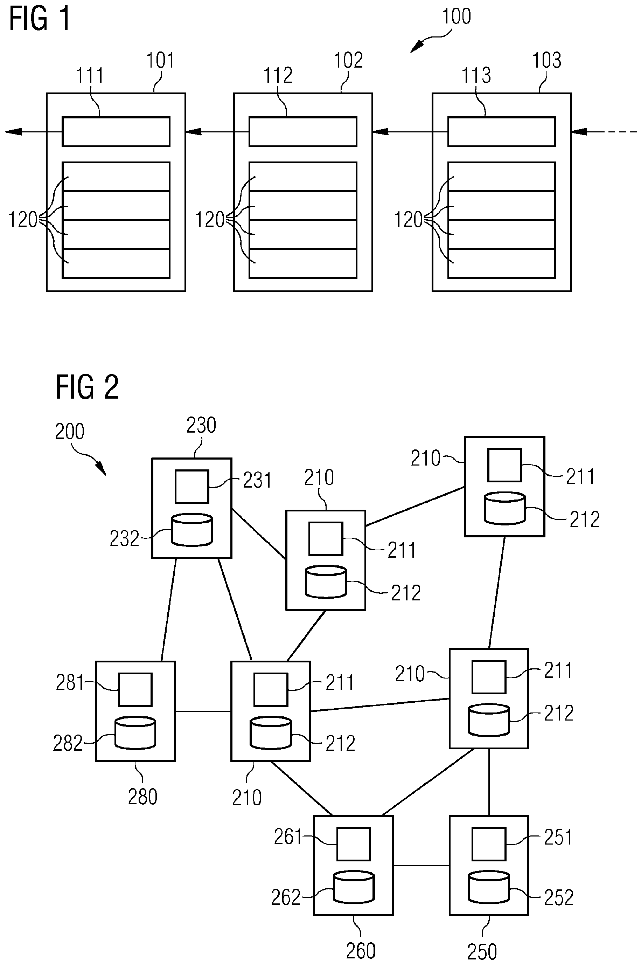

Fig. 1 veranschaulicht schematisch eine verteilte Datenbank 100. Im Folgenden wird davon ausgegangen, dass die verteilte Datenbank 100 als Blockchain implementiert ist. Es versteht sich jedoch, dass andere Implementierungen der verteilten Datenbank 100 ebenfalls möglich sind.

Die verteilte Datenbank 100 umfasst mehrere Datenblöcke 101-103, welche in Form einer Kette oder Folge von Datenblöcken 101-103 verknüpft sind. Jeder Datenblock 101-103 weist eine Prüfsumme 111-113 auf, welche beispielsweise einen Hashwert darstellt. Die Prüfsumme 111-113 wird abhängig von dem jeweils vorhergehenden Datenblock innerhalb der Folge von Datenblöcken 101-103 bestimmt. Beispielsweise wird die Prüfsumme 112 des Datenblocks 102 abhängig von dem Datenblock 101 gebildet, was durch den entsprechenden Pfeil in der Fig. 1 dargestellt wird. Die Prüfsumme 112 bzw. 113 des Datenblocks 102 bzw. 103 kann beispielsweise ein Hashwert sein, welcher anhand der in dem jeweils vorhergehenden Datenblock 101 bzw. 102 gespeicherten Daten berechnet wird. Dadurch kann eine (unautorisierte) Modifikation des Datenblocks 101 bzw. 102 erfasst werden, indem der Datenblock 101 bzw. 102 mit der Prüfsumme 112 bzw. 113 verglichen wird.

In jedem Datenblock 101-103 können Transaktionen 120 gespeichert sein. Jede Transaktion 120 kann entsprechende Daten beinhalten oder auf entsprechende Daten verweisen, indem ein entsprechender Verweis oder eine entsprechende Zusatzinformation oder eine entsprechende Prüfsumme usw. abgespeichert wird. Die in der verteilten Datenbank 100 gespeicherten Daten zu einer bestimmten Transaktion 120 werden hierin auch als Transaktionsdaten bezeichnet.

Die in den Datenblöcken 101-103 gespeicherten Transaktionsdaten können beispielsweise Daten zu einem Vertrag zwischen zwei oder mehr Benutzern der verteilten Datenbank 100 beinhalten.

Die in den Datenblöcken 101, 102, 103 gespeicherten Transaktionen 120 können insbesondere als Smart Contract realisierten Programmcode beinhalten. Dieser Programmcode kann Informationen umfassen, ob eine Transaktion 120 erlaubt ist. Auf diese Weise können beispielsweise verschiedene Geschäftsvorgänge wie Verträge oder dergleichen, auf flexible und manipulationssichere Weise über eine gemeinsame verteilte Datenbankstruktur organisiert werden. Zur Absicherung der Inhalte der jeweiligen Datenblöcke 101, 102, 103 kann beispielsweise ein Hash-Baum, ein Merkle-Baum oder ein Patricia-Baum genutzt werden.

Fig. 2 zeigt ein verteiltes Datenbanksystem 200, welches zur Implementierung der verteilten Datenbank 100 verwendet werden kann. Bei dem dargestellten Beispiel umfasst das verteilte Datenbanksystem mehrere Knoten 210, 230, 250, 260, 280 welche Transaktionen in der verteilten Datenbank 100 ausführen können. Wie dargestellt, verfügt jeder der Knoten 210, 230, 250, 260, 280 über wenigstens einen Prozessor 211, 231, 251, 261, 281 sowie über einen Speicher 212, 232, 252, 262, 282. Mittels des wenigstens einen Prozessors 211, 231, 251, 261, 281 kann Programmcode ausgeführt werden, der in dem Speicher 212, 232, 252, 262, 282 abgelegt ist. Hierbei kann es sich insbesondere um Programmcode der Transaktionen der verteilten Datenbank 100 handeln, z.B. Smart-Contract-Programmcode. Zumindest einige der Knoten 210, 230, 250, 260, 280 speichern wie oben erläutert die Transaktionsdaten 120 der verteilten Datenbank 100 und nehmen an einem Konsensusverfahren teil, um die gespeicherten Transaktionsdaten 120 miteinander abzugleichen und so gegen Manipulation zu schützen.

Die Knoten 210, 230, 250, 260, 280 können jeweils einem Benutzer der verteilten Datenbank 100 zugeordnet sein und dementsprechend auch als Benutzerknoten oder Teilnehmerknoten bezeichnet werden. Dabei ist jedem Benutzer der verteilten Datenbank eine erste Identität zugeordnet. Diese erste Identität kann insbesondere genutzt werden, um durch den Benutzer veranlasste Transaktionen zu signieren. Die erste Identität kann somit einer Blockchain-Identität des Benutzers entsprechen. Bei der ersten Identität kann es sich insbesondere um einen öffentlichen kryptographischen Schlüssel handeln. Der öffentliche kryptographische Schlüssel kann als Teil der Transaktionsdaten 120 in der verteilten Datenbank gespeichert werden. Weiterhin ist es auch möglich, einen Verweis auf den öffentlichen kryptographischen Schlüssel in den Transaktionsdaten 120 zu speichern, z.B. in Form eines Hashwertes oder einer anderen Art von Identifikator.

Bei dem verteilten Datenbanksystem 200 ist der Knoten 250 einem als vertrauenswürdig eingestuften Benutzer zugeordnet. Wie nachfolgend näher erläutert, können hierdurch über den Knoten 250 bestimmte Arten von Transaktionen veranlasst werden, welche für andere Benutzer der verteilten Datenbank 100 nicht verfügbar sind. Diese dienen insbesondere dazu, die erste Identität eines Benutzers der verteilten Datenbank 100 mit einer zweiten Identität zu verknüpfen. Bei dem Beispiel von Fig. 2 wird angenommen, dass für einen dem Knoten 230 zugeordneten Benutzer die erste Identität mit einer zweiten Identität verknüpft werden soll. Hierzu veranlasst der Benutzer des Knotens 230 eine entsprechende Transaktion in der verteilten Datenbank 100. Bei dem Knoten 230 muss es sich nicht um einen Teilnehmer der verteilten Datenbank 100 handeln, d.h. es ist nicht erforderlich, dass der Knoten 230 selbst Transaktionsdaten der verteilten Datenbank 100 speichert oder am Konsensusverfahren der verteilten Datenbank 100 teilnimmt.

Bei der zweiten Identität kann es sich insbesondere um Informationen handeln, welcher den Benutzer außerhalb der verteilten Datenbank als natürliche Person, juristische Person, Organisation, Maschine oder physikalisches Objekt identifiziert. Die zweite Identität ermöglicht dabei vorzugsweise eine eindeutige Identifizierung des Benutzers. Die zweite Identität ist somit nutzbar, um den jeweiligen Benutzer außerhalb der verteilten Datenbank 100 zu identifizieren. Mit anderen Worten kann die erste Identität des Benutzers anonym oder pseudonym genutzt werden, wohingegen die Verknüpfung der ersten Identität mit der zweiten Identität den anonymen bzw. pseudonymen Charakter der ersten Identität aufhebt. Bei dem dargestellten Beispiel wird die Verknüpfung vorgenommen, indem eine als Zertifikat bezeichnete Datenstruktur in der verteilten Datenbank 100, d.h. als Teil der Transaktionsdaten 120, gespeichert wird. Das Zertifikat kann dabei insbesondere als Zustand eines Smart Contracts in der verteilten Datenbank 100 gespeichert werden.

Der Knoten 250, welcher die Verknüpfung veranlasst, kann somit auch als "Certification Authority" (CA) bzw. CA-Knoten bezeichnet werden. Indem die Verknüpfung in der verteilten Datenbank 100 gespeichert wird und indem die entsprechende Transaktion nur durch den CA-Knoten 250 veranlasst werden kann, können Manipulationen der Verknüpfung zuverlässig vermieden werden. Weiterhin kann auch vorgesehen sein, dass durch den CA-Knoten 250 Transaktionen veranlasst werden, um eine bereits bestehende Verknüpfung der ersten Identität und der zweiten Identität eines Benutzers wieder aufzuheben. Dies kann beinhalten, dass ein bereits in der verteilten Datenbank 100 gespeichertes Zertifikat als widerrufen gekennzeichnet wird oder gelöscht wird.

Bei dem dargestellten Beispiel interagiert der CA-Knoten 250 über die verteilte Datenbank 100 mit einem weiteren Knoten 260, welche den CA-Knoten 250 bei einer Prüfung der zweiten Identität des Benutzers unterstützt. Insbesondere kann der weitere Knoten 260 dem CA-Knoten die Authentizität bzw. Legalität der zweiten Identität bestätigen. Dies kann auf ähnliche Weise erfolgen wie bei einer "Registration Authority" (RA) eines herkömmlichen PKI-Systems. Der Knoten 260 kann daher auch als RA-Knoten bezeichnet werden. Bei dem dargestellten Beispiel bestätigt der RA-Knoten 260 durch eine Transaktion in der verteilten Datenbank 100 die Authentizität bzw. Legalität der zweiten Identität . Wie bereits erwähnt, kann mittels des wenigstens einen Prozessors 261 des RA-Knotens Programmcode ausgeführt werden, der in dem Speicher 262 abgelegt ist. Hierbei kann es sich insbesondere um Programmcode handeln, um typische RA-Funktionen zu implementieren. Bei dem RA-Knoten 260 muss es sich nicht um einen Teilnehmer der verteilten Datenbank 100 handeln, d.h. es ist nicht erforderlich, dass der RA-Knoten 260 selbst Transaktionsdaten der verteilten Datenbank 100 speichert oder am Konsensusverfahren der verteilten Datenbank 100 teilnimmt.

Wie dargestellt können bei dem verteilten Datenbanksystem 200 auch ein oder mehrere Zugangsknoten 280 vorgesehen sein, über welche Abfragen an die verteilte Datenbank 100 möglich sind. Beispielsweise kann der Zugangsknoten 280 eine Anfrage zu einer bestimmten Transaktion an die verteilte Datenbank 100 senden und dann eine Antwort erhalten, welche anzeigt ob die Transaktion erlaubt ist oder nicht und darüber hinaus die zweite Identität des Benutzers anzeigt, durch den die Transaktion veranlasst wurde. Über den Knoten 280 kann beispielsweise auch eine Anfrage an die verteilte Datenbank 100 gestellt werden, um die zweite Identität des Benutzers zu verifizieren. Bei dem Zugangsknoten 280 muss es sich nicht um einen Teilnehmer der verteilten Datenbank 100 handeln, d.h. es ist nicht erforderlich, dass der Zugangsknoten 280 selbst Transaktionsdaten der verteilten Datenbank 100 speichert oder am Konsensusverfahren der verteilten Datenbank 100 teilnimmt.

Obwohl in Fig. 2 lediglich ein CA-Knoten 250 und ein RA-Knoten 260 dargestellt sind, versteht es sich, dass bei manchen Implementierungen auch mehrere CA-Knoten 250 und/oder mehrere RA-Knoten 260 vorgesehen sein könnten. Ebenso können mehrere Knoten 230 vorgesehen sein, über welche ein Benutzer eine Verknüpfung seiner ersten Identität mit einer zweiten Identität veranlassen kann. Weiterhin kann auch eine beliebige Anzahl von Zugangsknoten 280 vorgesehen sein, oder es könnte vollständig auf gesonderte Zugangsknoten, welche nicht Teilnehmer der verteilten Datenbank 100 sind, verzichtet werden.

Bei einer beispielhaften Implementierung kann ein Smart-Contract-Programmcode zur Implementierung der oben erläuterten Funktionalitäten folgende Funktionen aufweisen:
- eine Funktion "requestCertificate",
- eine Funktion "approveEntity",
- eine Funktion "certifyEntity",
- eine Funktion "revokeCertificate",
- eine Funktion "deleteCertificate" und
- eine Funktion "verifyEntity".

Diese Funktionen können beispielsweise jeweils durch einen oder mehrere Smart-Contract-Prozesse implementiert sein.

Die grundlegende Datenstruktur kann ein Zertifikat wie in Tabelle 1 gezeigt definiert werden.

**Tabelle 1**

| | |
|---|---|
| struct Certificate { | |
| address | blockchainId; |
| string | commonName; |
| uint256 | startDate; |
| uint256 | endDate; |
| State | state; |
| } | |

Hierbei steht "blockchainId" für die Adresse in der Blockchain, welche der oben genannten ersten Identität entspricht, "commonName" für die zweite Identität, die mit der ersten Identität aus der Blockchain verknüpft werden soll, und "startDate" und "endDate" definieren Beginn bzw. Ende eines Gültigkeitszeitraums des Zertifikats. Ein Zustand des Zertifikats wird durch "state" angegeben und kann die Werte "Requested", "Approved", "Certified" und "Revoked" annehmen, welche im Normalfall nacheinander zumindest bis "Certified" durchlaufen werden.

Als Datenstruktur zum Sammeln der Zertifikate kann bei der Smart-Contract-Sprache "Solidity" ein als "certificates" bezeichnetes Mapping genutzt werden. Ein Mapping ist in Solidity eine Datenstruktur, bei der über beliebige Indizes auf andere Daten zugegriffen werden kann, wobei jedem im Mapping vorhandenen Schlüsselwert genau ein Datum zugeordnet ist. Es versteht sich jedoch, dass vergleichbare Datenstrukturen auch in anderen Sprachen zur Verfügung stehen und genutzt werden könnten. So wird in den Sprachen Python und Smalltalk eine dem Mapping von Solidity vergleichbare Datenstruktur "Dictionary" genannt, in Perl "Hash" und in Java "Hashtable", was auf die zu ihrer Implementierung verwendete Technik der Hashtabellen hinweist. In den Sprachen Javascript und Wolfram Language wird eine vergleichbare Datenstruktur mit "Associative Array" bezeichnet. Im Mapping "certificates" sind die Schlüssel Blockchainadressen, die Werte Zertifikate. Weil über Mappings in Solidity nicht iteriert werden kann, können zusätzlich Listen von Adressen, für die Zertifikate beantragt bzw. auf "Approved" gesetzt wurden, genutzt werden.

Zunächst kann ein Benutzer in der Blockchain ein Zertifikat durch Aufruf der Funktion "requestCertificate" beantragen, wobei er als Parameter die zweite Identität mitgibt, mit der der Benutzer zertifiziert werden will. Der Smart Contract überprüft zunächst, ob es zur aufrufenden Blockchainadressse bereits ein Zertifikat gibt. Ist dies der Fall, kann kein neues beantragt werden.

Das neue Zertifikat wird mit dem Status "Requested" unter der Blockchainadresse des Antragstellers in das Mapping "certificates" eingetragen, und diese Adresse wird auch an die Liste der beantragten Zertifikate angehängt. Die Gültigkeitsdauer des Zertifikats wird bei dem dargestellten Beispiel auf ein Jahr ab Erstellung festgelegt.

Die Funktion "approveEntity" darf nur von der RA verwendet werden. Bei praktischen Anwendungen kann die RA auch über die im dargestellten Beispiel realisierte Funktionalität hinausgehende Aufgaben haben. Diese Aufgaben können unter Umständen auch manuell durchzuführende Vorgänge beinhalten, z. B. wenn zur Authentifizierung natürlichen Person ein Ausweisdokument der Person vorzulegen ist. Die RA arbeitet alle in der Liste der beantragten Zertifikate befindlichen Einträge ab.

Wenn die RA die Identität bestätigt und feststellt, dass ein Zertifikat erteilt werden kann, veranlasst die RA, dass mit der Funktion "approveEntity" der Status des Zertifikats im Mapping "certificates" auf "Approved" erhöht wird. Die Adresse des Antragstellers wird aus der Liste der beantragten Zertifikate entfernt und an die Liste "approvedCertificates" angehängt.

Die Funktion "certifyEntity" darf nur von der CA verwendet werden. Die CA arbeitet alle in der Liste "approvedCertificates" befindlichen Einträge ab. Die CA setzt den Status des entsprechenden Zertifikats im Mapping "certificates" auf "Certified" und entfernt die Adresse aus der Liste "approvedCertificates".

Wenn nun irgendein Benutzer der Blockchain überprüfen will, ob eine andere Identität tatsächlich zu einer bestimmten Blockchainadresse gehört, ruft er die Funktion "verifyEntity" auf, die als Parameter die Blockchainadresse und die als String codierte andere Identität erhält. Die Funktion prüft, ob unter der angegeben Adresse in "certificates" ein Eintrag mit dem Status "Certified" und dem angegebenen String existiert. Ist dies der Fall, und ist das Zertifikat noch nicht abgelaufen, wird als Antwort "true" zurückgegeben, in allen anderen Fällen wird als Antwort "false" ausgegeben.

Weiterhin sind bei dem dargestellten Beispiel Funktionen vorgesehen, um Zertifikate zu revozieren oder zu löschen. So kann die CA durch die Funktion "revokeCertificate" den Status eines Zertifikats im Mapping "certificates" auf "Revoked" setzen, um das Zertifikat zu widerrufen, oder durch die Funktion "deleteCertificate" ein Zertifikats aus dem Mapping "certificates" löschen.

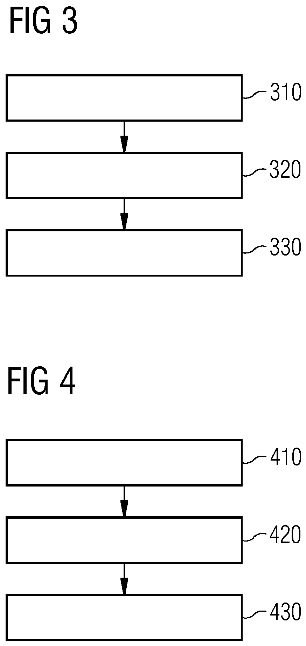

Fig. 3 zeigt ein Flussdiagramm zur Veranschaulichung eines Verfahrens, das zur Implementierung der dargestellten Konzepte in einem Knoten 210, 230, 250, 260, 280 des verteilten Datenbanksystems 200 genutzt werden kann. Das Verfahren kann beispielsweise implementiert werden, indem Programmcode, welcher in einem Speicher des Knotens 210, 230, 250, 260, 280 abgelegt ist, von einem oder mehreren Prozessoren 211, 231, 251, 261, 281 des Knotens 210, 230, 250, 260, 280 ausgeführt wird.

Bei Block 310 kann der Knoten 210, 230, 250, 260, 280 optional erste Transaktionsdaten 120 einer ersten Transaktion in der verteilten Datenbank 100 speichern. Die erste Transaktion wird durch einen Benutzer der verteilten Datenbank 100 veranlasst. Hierbei kann es sich um einen dem Knoten 210, 230, 250, 260, 280 zugeordneten Benutzer oder einen anderen Benutzer der verteilten Datenbank handeln. Dem Benutzer ist eine erste Identität zugeordnet. Die Transaktion kann mit einer ersten Identität verknüpft sein. Bei der ersten Transaktion kann es sich um eine Anfrage des Benutzers für eine Verknüpfung der ersten Identität mit einer zweiten Identität handeln, z.B. durch Aufruf der oben genannten Funktion "requestCertificate".

Bei der ersten Identität kann es sich um einen zum Signieren der ersten Transaktion genutzten öffentlichen kryptographischen Schlüssel des Benutzers handeln. Die ersten Transaktionsdaten können den öffentlichen kryptographischen Schlüssel, einen Hashwert des öffentlichen kryptographischen Schlüssels und/oder einen anderweitigen Identifikator des öffentlichen kryptographischen Schlüssels beinhalten.

Bei Block 320 speichert der Knoten 210, 230, 250, 260, 280 zweite Transaktionsdaten 120 einer zweiten Transaktion in der verteilten Datenbank 100. Die zweite Transaktion verknüpft die erste Identität mit einer zweiten Identität. Dies kann beispielsweise beinhalten, dass ein entsprechendes Zertifikat, welches die erste Identität der zweiten Identität zuordnet, in der verteilten Datenbank 100 gespeichert wird. Die zweite Transaktion kann insbesondere durch einen als vertrauenswürdig eingestuften Benutzer der verteilten Datenbank 100 veranlasst sein, z.B. über den oben genannten CA-Knoten 250.

Über zweite Identität kann der Benutzer außerhalb der verteilten Datenbank identifizierbar sein. Ein anonymer oder pseudonymer Charakter der ersten Identität kann somit durch die Verknüpfung aufgehoben werden. Die zweite Identität kann beispielsweise eine oder mehrere Informationen beinhalten, welche den Benutzer als natürliche Person, juristische Person, Organisation, Maschine oder physikalisches Objekt identifizieren, z.B. in Form eines Namens oder einer Adresse.

Bei Block 330 kann der Knoten 210, 230, 250, 260, 280 optional weiterhin dritte Transaktionsdaten 120 einer dritten Transaktion in der verteilten Datenbank 100 speichern. Die dritte Transaktion bewirkt, dass die Verknüpfung der ersten Identität des Benutzers mit der zweiten Identität des Benutzers aufgehoben wird. Dies kann beinhalten, dass ein bereits in der verteilten Datenbank 100 gespeichertes Zertifikat, welches die erste Identität der zweiten Identität zuordnet, als widerrufen deklariert oder aus der verteilten Datenbank 100 gelöscht wird. Die dritte Transaktion kann insbesondere durch einen als vertrauenswürdig eingestuften Benutzer der verteilten Datenbank 100 veranlasst sein, z.B. über den oben genannten CA-Knoten 250.

Fig. 4 zeigt ein Flussdiagramm zur Veranschaulichung eines Verfahrens, das zur Implementierung der dargestellten Konzepte in dem CA-Knoten 250 und/oder RA-Knoten 260 des verteilten Datenbanksystems 200 genutzt werden kann. Das Verfahren kann beispielsweise implementiert werden, indem Programmcode, welcher in einem Speicher des CA-Knotens 250 bzw. RA-Knotens 260 abgelegt ist, von einem oder mehreren Prozessoren 251 des CA-Knotens 250 bzw. einem oder mehreren Prozessoren 261 des RA-Knotens 260 ausgeführt wird.

Bei Block 410 wird für einen Benutzer der verteilten Datenbank 100, welcher eine erste Identität aufweist, eine zweite Identität. Dies kann beispielsweise beinhalten, dass der CA-Knoten 250 über die verteilte Datenbank 100 mit dem RA-Knoten 260 interagiert, um von dem RA-Knoten 260 eine Bestätigung der Authentizität oder Legalität der zweiten Identität zu erhalten. Insbesondere kann der RA-Knoten 260 in der verteilten Datenbank 100 eine Transaktion veranlassen, welche die Authentizität oder Legalität der zweiten Identität des Benutzers bestätigt. Der CA-Knoten kann daraufhin eine Transaktion veranlassen, welche die erste Identität mit der zweiten Identität verknüpft. Alternativ wäre es jedoch auch möglich, dass der CA-Knoten 250 ohne Einbeziehung der verteilten Datenbank 100 mit dem RA-Knoten 260 interagiert, z.B. indem der CA-Knoten 250 eine Anfrage an den RA-Knoten 260 sendet, woraufhin der RA-Knoten 260 die Authentizität bzw. Legalität der zweiten Identität mit einer Antwort an den CA-Knoten 250 bestätigt oder nicht bestätigt.

Bei der ersten Identität kann es sich um einen zum Signieren von Transaktionen in der verteilten Datenbank nutzbaren öffentlichen kryptographischen Schlüssel des Benutzers handeln. Die Transaktionsdaten solcher Transaktionen können den öffentlichen kryptographischen Schlüssel, einen Hashwert des öffentlichen kryptographischen Schlüssels und/oder einen anderweitigen Identifikator des öffentlichen kryptographischen Schlüssels beinhalten.

Bei Block 420 veranlasst der CA-Konten 250, welcher einem als vertrauenswürdig eingestuften Benutzer der verteilten Datenbank 100 zugeordnet ist, eine Transaktion in der verteilten Datenbank 100. Die Transaktion verknüpft die erste Identität des Benutzers mit der zweiten Identität des Benutzers. Dies kann beispielsweise beinhalten, dass ein entsprechendes Zertifikat, welches die erste Identität der zweiten Identität zuordnet, in der verteilten Datenbank 100 gespeichert wird.

Die Funktionen der Blöcke 410 und 420 können auch in einer Transaktion vereinheitlicht sein, welche z.B. durch den CA-Knoten oder den RA-Knoten 260 veranlasst werden kann. Über zweite Identität kann der Benutzer außerhalb der verteilten Datenbank identifizierbar sein. Ein anonymer oder pseudonymer Charakter der ersten Identität kann somit durch die Verknüpfung aufgehoben werden. Die zweite Identität kann beispielsweise eine oder mehrere Informationen beinhalten, welcher den Benutzer als natürliche Person, juristische Person, Organisation, Maschine oder physikalisches Objekt identifizieren. Solche Informationen können beispielsweise einen Namen, z.B. Personennamen, Organisationsnamen, Gerätenamen, Produktnamen oder Herstellernamen beinhalten. Weiterhin können solche Informationen auch anderweitige Kennzeichnungsinformationen, z.B. eine Produktnummer, oder Adressdaten umfassen.

Bei Block 430 kann optional eine weitere Transaktion in der verteilten Datenbank 100 veranlasst werden, welche die Verknüpfung der ersten Identität des Benutzers mit der zweiten Identität des Benutzers aufhebt. Dies kann beispielsweise beinhalten, dass der CA-Knoten 250 ein entsprechendes Zertifikat, welches die erste Identität der zweiten Identität zuordnet, als widerrufen deklariert oder aus der verteilten Datenbank 100 löscht.

Bei den dargestellten Konzepten kann somit eine Verknüpfung von zwei Identitäten eines Benutzers der verteilten Datenbank 100 über die verteilte Datenbank 100 selbst realisiert werden, ohne dass beispielsweise eine dedizierte PKI-Infrastruktur benötigt wird. Es ist jedoch möglich, die RA eines bestehenden PKI-Systems zu nutzen wodurch die Implementierung oder Integration in bestehende Systeme vereinfacht werden kann. Im Ergebnis kann erreicht werden, dass für Transaktionspartner in der verteilten Datenbank 100 zertifizierte bzw. authentifizierte Identitäten verfügbar sind. Die Verknüpfung der ersten Identität mit der zweiten Identität kann mittels der verteilten Datenbank 100 auf einfache und manipulationssichere Weise realisiert werden. Weiterhin kann eine gute Nachprüfbarkeit und Nachverfolgbarkeit von etwaigen Änderungen einer solchen Verknüpfung erreicht werden. Ein zur Implementierung genutzter Programmcode, z.B. Smart-Contract-Programmcode kann mit geringem Aufwand und geringer Komplexität erstellt werden, was auch eine vereinfachte Überprüfbarkeit des Programmcodes ermöglicht. Durch eine Implementierung mittels Programmcode, der selbst in der verteilten Datenbank 100 abgelegt ist, z.B. als Smart-Contract-Programmcode, kann weiterhin eine leichte Aktualisierbarkeit des Programmcodes erreicht werden.

Es versteht sich, dass bei den vorangegangenen Beispielen zahlreiche Modifikationen möglich sind. So sind neben einer Implementierung der verteilten Datenbank 100 als Blockchain auch verschiedene andere Implementierungen möglich, z.B. als "distributed Ledger", welcher nicht auf einer linearen Blockstruktur basiert. Weiterhin können verschiedene Arten von Vorrichtungen oder Systemen verwendet werden um die Knoten 210, 250 des verteilten Datenbanksystems 200 zu implementieren.

Sofern es in der vorangegangenen Beschreibung nicht anders angegeben ist, beziehen sich die Begriffe "durchführen", "berechnen", "rechnergestützt", "rechnen", "feststellen", "generieren", "konfigurieren", "rekonstruieren", "steuern", "zuweisen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" oder "Vorrichtung" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der vorliegenden Offenbarung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der vorliegenden Offenbarung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung eines hierin offenbarten Verfahrens ausgerüstet wird oder mit Konfigurationsschritten derart konfiguriert ist, dass der programmierbare Prozessor die offenbarten Merkmale von Verfahren, Komponenten, Module oder anderer Aspekte und/oder Teilaspekte der vorliegenden Offenbarung realisiert.

Unter einer "Speichereinheit" oder "Speichermodul" oder dergleichen kann im Zusammenhang mit der vorliegenden Offenbarung beispielsweise ein flüchtiger Speicher in Form von Arbeitsspeicher (RAM) oder ein dauerhafter Speicher wie eine Festplatte oder ein Datenträger verstanden werden.

Unter "bereitstellen", insbesondere in Bezug auf Daten und/oder Informationen, kann im Zusammenhang mit der vorliegenden Offenbarung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der vorliegenden Offenbarung beispielsweise auch ein Laden oder ein Speichern, beispielsweise einer Transaktion mit entsprechenden Daten, verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten des verteilten Datenbanksystems verstanden werden.

Unter "Smart-Contract-Prozess" kann im Zusammenhang mit der vorliegenden Offenbarung insbesondere ein Ausführen eines Programmcodes (z. B. der Steuerbefehle) in einem Prozess durch die verteilte Datenbank bzw. deren Infrastruktur verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der vorliegenden Offenbarung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockchain oder Datenblock-Header eines Datenblocks der verteilten Datenbank oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen der verteilten Datenbank ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft.

Unter einer "Datenblockprüfsumme" kann im Zusammenhang mit der vorliegenden Offenbarung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität der verteilten Datenbank prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks für den die Datenblockprüfsumme gebildet wurde) kann beispielsweise die Datenblockprüfsumme umfassen.

Unter "Transaktionsprüfsumme" kann im Zusammenhang mit der vorliegenden Offenbarung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der vorliegenden Offenbarung eine Prüfsumme verstanden werden, die insbesondere einen jeweiligen Datenblock der verteilten Datenbank den vorhergehenden Datenblock der verteilten Datenbank angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock der verteilten Datenbank) verwendet werden, um einen neuen Datenblock mit einem (vorhandenen) Datenblock der verteilten Datenbank zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock der verteilten Datenbank umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen beziehen. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transkation eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems sein, eine Transaktionsprüfsumme eines Datenblocks mit den entsprechenden Daten (der verteilten Datenbank oder einer anderen Datenbank) oder eine Datenprüfsumme, die über die Daten gebildet wurde.

Zusätzlich kann die entsprechende Transkation noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblock der verteilten Datenbank bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in der entsprechenden Transaktionen abgelegt sein, der insbesondere einen Speicherort angibt, wo die Daten abgerufen werden können. Das ist insbesondere dahingehend vorteilhaft, um eine Datengröße der verteilten Datenbank möglichst gering zu halten.

Unter "Sicherheit" kann im Zusammenhang mit der vorliegenden Offenbarung beispielsweise ein Schutz von Daten verstanden werden, der insbesondere durch ein kryptographisches Verfahren realisiert wird. Beispielsweise kann dies durch eine Nutzung der verteilten Datenbank für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken kann im Zusammenhang mit der vorliegenden Offenbarung beispielsweise verstanden werden, dass Datenblöcke jeweils eine Information (z. B. Verkettungsprüfsumme) umfassen, die auf einen anderen Datenblock oder mehrere andere Datenblöcke der verteilten Datenbank verweisen bzw. diese referenzieren [1][4][5].

Unter "Einfügen in die verteilte Datenbank", "Hinterlegen von Daten in der verteilten Datenbank" "Speichern in der verteilten Datenbank" oder dergleichen kann im Zusammenhang mit der vorliegenden Offenbarung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock der verteilten Datenbank verkettet [1] [4] [5] . Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockchain-Orakel oder eine Blockhain-Plattform) erfolgen. Insbesondere kann dabei unter einer Blockchain-Plattform eine Blockchain als Dienst (bzw. "Blockchain als Service") verstanden werden, wie es beispielsweise durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in dem von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock der verteilten Datenbank verkettet hat.

Unter "Transaktion" bzw. "Transaktionen" können im Zusammenhang mit der vorliegenden Offenbarung beispielsweise ein Smart-Contract [4] [5], eine Datenstruktur oder ein Transaktionsdatensatz verstanden werden, der insbesondere jeweils eine der Transaktionen oder mehrere Transkationen umfasst. Unter "Transaktion" bzw. "Transaktionen" können im Zusammenhang mit der Erfindung beispielsweise auch die Daten einer Transaktion eines Datenblocks einer Blockchain verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktionen und/oder Bestätigungstransaktion verstanden werden. Alternativ kann eine Transaktion beispielsweise eine Datenstruktur sein, die Daten speichert (z. B. Steuerbefehle und/oder Vertragsdaten und/oder andere Daten wie Videodaten, Nutzerdaten, Messdaten etc.).

Unter "Speichern von Transaktionen in Datenblöcken", "Speichern von Transaktionen" und dergleichen kann ein direktes Speichern oder indirektes Speichern verstanden werden. Unter einem direkten Speichern kann dabei beispielsweise verstanden werden, dass der entsprechende Datenblock oder die entsprechende Transaktion die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in die verteilte Datenbank" erläutert ist. Unter einem "Programmcode" (z. B. ein Smart-Contract) kann im Zusammenhang mit der vorliegenden Offenbarung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem ausgeführt. Dies kann beispielsweise mittels einer Ausführungsumgebung (z. B. einer virtuellen Maschine) realisiert werden, wobei die zugrundeliegende Programmiersprache vorzugsweise Turing-vollständig ist. Der Programmcode wird vorzugsweise durch die Infrastruktur des verteilten Datenbanksystems ausgeführt [4][5]. Dabei wird beispielsweise eine virtuelle Maschine durch die Infrastruktur des verteilten Datenbanksystems realisiert.

Unter einem "Smart Contract" kann im Zusammenhang mit der vorliegenden Offenbarung beispielsweise ein ausführbarer Programmcode verstanden werden [4][5] (siehe insbesondere Definition "Programmcode"). Der Smart Contract ist vorzugsweise in einer Transaktion einer verteilten Datenbank (z. B. eine Blockchain) gespeichert, beispielsweise in einem Datenblock der verteilten Datenbank. Beispielsweise kann der Smart Contract auf die gleiche Weise ausgeführt werden, wie dies bei der Definition von "Programmcode", insbesondere im Zusammenhang mit der Erfindung, erläutert ist.

Unter "Proof-of-Work-Nachweis" kann im Zusammenhang mit der vorliegenden Offenbarung beispielsweise ein Lösen einer rechenintensiven Aufgabe verstanden werden, die insbesondere abhängig vom Datenblock-Inhalt/Inhalt einer bestimmten Transaktion zu lösen ist [1] [4] [5]. Eine solche rechenintensive Aufgabe wird beispielsweise auch als kryptographisches Puzzle bezeichnet.

Unter einer "verteilten Datenbank" kann im Zusammenhang mit der vorliegenden Offenbarung beispielsweise eine dezentral verteilte Datenbank, eine Blockchain bzw. Blockkette, ein distributed Ledger, ein verteiltes Speichersystem, ein Distributed Ledger Technology (DLT) basiertes System (DLTS), ein revisionssicheres Datenbanksystem, eine Cloud, ein Cloud-Service, eine Blockchain in einer Cloud oder eine Peer-to-Peer Datenbank verstanden werden. Auch können beispielsweise unterschiedliche Implementierungen einer Blockchain oder eines DLTS verwendet werden, wie z. B. eine Blockchain oder ein DLTS, die mittels eines Directed Acylic Graph (DAG), eines kryptographischen Puzzles, einem Hashgraph oder eine Kombination aus den genannten Implementierungsvarianten [6][7]. Auch können beispielsweise unterschiedliche Konsensusverfahren (engl. "consensus algorithms") implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6] [7]. Wird beispielsweise eine Blockchain verwendet, so kann diese insbesondere mittels einer Bitcoin-basierten Realisierung oder einer Ethereum-basierten Realisierung umgesetzt werden [1] [4] [5].

Unter einem "verteilten Datenbanksystem" kann ein System zur Implementierung einer verteilten Datenbank bzw. deren Infrastruktur verstanden werden. Bei einem solchen verteilten Datenbanksystem kann beispielsweise auch ein verteiltes Datenbanksystem verstanden werden, von dem zumindest ein Teil seiner Knoten, Vorrichtungen und/oder Infrastruktur durch eine Cloud realisiert sein. Beispielsweise können die entsprechenden Komponenten als virtuelle Komponenten in der Cloud realisiert sein (z. B. als virtueller Knoten oder eine virtuelle Maschine). Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockchain verwendet wird, wobei die Blockchain selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen miteinander über gerichtete Kanten miteinander verbunden. Azyklisch bedeutet dabei insbesondere, dass es keine Schleifen bei einem Durchlaufen des Graphen gibt. Durch die gerichteten Kanten und die Azyklizität kann sichergestellt werden, dass die zeitliche Reihenfolge vieler Transaktionen eindeutig feststeht.

Bei der verteilten Datenbank kann es sich beispielsweise um eine öffentliche verteilte Datenbank (z. B. eine öffentliche Blockchain) oder eine geschlossene (oder private) verteilte Datenbank (z. B. eine private Blockchain) handeln.

Handelt es sich beispielsweise um eine öffentliche verteilte Datenbank, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte zunächst anonym bleiben.

Handelt es sich bei der verteilten Datenbank beispielsweise um eine geschlossene verteilte Datenbank, können neue Knoten und/oder Vorrichtungen beispielsweise einen gültigen Berechtigungsnachweis und/oder gültige Authentifizierungsinformationen und/oder gültige Credentials und/oder gültige Anmeldeinformationen benötigen, um dem verteilten Datenbanksystem beitreten können bzw. von diesem akzeptiert zu werden.

Bei dem verteilten Datenbanksystem kann es sich beispielsweise auch um ein verteiltes Kommunikationssystem zum Datenaustausch handeln. Dies kann beispielsweise ein Netzwerk oder ein Peer-2-Peer Netzwerk sein.

Unter einem "Datenblock", der insbesondere je nach Kontext und Realisierung auch als "Glied" oder "Block" bezeichnet sein kann, kann im Zusammenhang mit der vorliegenden Offenbarung beispielsweise ein Datenblock in einer verteilten Datenbank verstanden werden, der insbesondere als Datenstruktur realisiert ist und vorzugsweise jeweils eine der Transaktionen oder mehrere der Transaktionen umfasst. Bei einer Implementierung kann beispielsweise die verteilte Datenbank (oder das Datenbanksystem) ein DLTS oder eine Blockchain sein und ein Datenblock ein Block der Blockchain oder des DLTS. Ein Datenblock kann beispielsweise Angaben zur Größe (Datengröße in Byte) des Datenblocks, einen Datenblock-Header (engl. Blockheader), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1] [4] [5]. Bei einem Datenblock kann es sich beispielsweise auch nur um einen bestimmten Speicherbereich oder Adressbereich der Gesamtdaten handeln, die in der verteilten Datenbank gespeichert sind. Damit lassen sich beispielsweise blocklose (engl. blockless) verteilte Datenbanken, wie z. B. die IoT Chain (ITC), IOTA, und Byteball, realisieren. Hierbei werden insbesondere die Funktionalitäten der Blöcke einer Blockchain und der Transaktionen miteinander derart kombiniert, dass z. B. die Transaktionen selbst die Sequenz oder Kette von Transaktionen (der verteilten Datenbank) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in der verteilten Datenbank in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht. Unter "Nonce" kann im Zusammenhang mit der vorliegenden Offenbarung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes" kann im Zusammenhang mit der Erfindung beispielsweise der Datenblock der verteilten Datenbank verstanden werden, der insbesondere einem (bestimmten) Datenblock direkt vorhergeht. Alternativ können unter "vorhergehende Datenblöcke eines (bestimmten) Datenblockes" insbesondere auch alle Datenblöcke der verteilten Datenbank verstanden werden, die dem bestimmten Datenblock vorhergehen. Solche vorhergehenden Datenblöcke können auch als "Vorgängerdatenblock" bezeichnet werden. Hierdurch kann beispielsweise die Verkettungsprüfsumme oder die Transaktionsprüfsumme insbesondere nur über das dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Knoten" können im Zusammenhang mit der vorliegenden Offenbarung beispielsweise Geräte (z. B. Feldgeräte, Mobiltelefone), Rechner, Personal Computer, Smart-Phones, Clients oder Teilnehmergeräte verstanden werden, die Operationen mit oder in der verteilten Datenbank durchführen [1] [4] [5]. Solche Knoten können beispielsweise Transaktionen der verteilten Datenbank bzw. deren Datenblöcke ausführen oder neue Datenblöcke mit neuen Transaktionen in die verteilte Datenbank einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit der verteilten Datenbank, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Ein Knoten umfasst typischerweise wenigstens einen Prozessor, um z. B. seine Funktionen rechnergestützt bzw. computerimplementiert auszuführen.

Unter einem "Blockchain-Orakel" können im Zusammenhang mit der vorliegenden Offenbarung beispielsweise Knoten, Geräte oder Rechner verstanden werden, die z. B. über ein Sicherheitsmodul verfügen, das beispielsweise mittels Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Blockchain-Orakel löscht umfasst). Das Sicherheitsmodul kann dabei beispielsweise kryptographische Schlüssel umfassen, die für die Berechnung der Prüfsummen (z. B. Transaktionsprüfsummen oder Knotenprüfsummen) notwendig sind.

Unter einer "Vorrichtung" kann im Zusammenhang mit der vorliegenden Offenbarung beispielsweise ein Computer(system), ein Client, ein Smart-Phone, ein Server oder ein ähnliches Gerät verstanden werden. Eine solche Vorrichtung kann außerhalb des verteilten Datenbanksystems angeordnet sein bzw. kein Teilnehmer der verteilten Datenbank (z. B. der Blockchain) sein (also selbst keine Operationen in der verteilten Datenbank durchführen und diese beispielsweise nur abfragen, ohne jedoch Transaktionen durchzuführen, Datenblöcke einzufügen oder Proof-of-Work-Nachweise zu berechnen). Alternativ kann eine solche Vorrichtung auch einen Knoten des verteilten Datenbanksystems implementieren. Mit anderen Worten kann insbesondere unter einer Vorrichtung ein Knoten des verteilten Datenbanksystems verstanden werden oder auch eine Vorrichtung außerhalb des verteilten Datenbanksystems. Eine Vorrichtung außerhalb des verteilten Datenbanksystems kann beispielsweise auf die Daten (z. B. Transaktionen) der verteilten Datenbank zugreifen und/oder von Knoten (z. B. mittels Smart-Contracts und/oder Blockchain-Orakel) angesteuert werden. Wird beispielsweise eine Ansteuerung bzw. Steuerung einer Vorrichtung außerhalb des verteilten Datenbanksystems durch einen Knoten des verteilten Datenbanksystems realisiert, kann dies z. B. mittels eines Smart-Contracts erfolgen, der insbesondere in einer Transaktion der verteilten Datenbank gespeichert ist.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird
   "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles https://blockchainhub.net/blockchain-oracles/ Stand 14.03.2018

## Patentansprüche

1. Vorrichtung (210, 230, 250, 260, 280) zur Bereitstellung einer verteilten Datenbank (100), wobei die Vorrichtung (210, 230, 250, 260, 280) ausgestaltet ist zum:
- für einen Benutzer der verteilten Datenbank (100), welcher eine erste Identität aufweist, Speichern von Transaktionsdaten (120) einer Transaktion in der verteilten Datenbank (100),
wobei die Transaktion die erste Identität mit einer zweiten Identität verknüpft.

2. Vorrichtung (210, 230, 250, 260, 280) nach Anspruch 1, wobei die Vorrichtung (210, 250) weiterhin ausgestaltet ist zum:
- Speichern von Transaktionsdaten (120) wenigstens einer weiteren Transaktion in der verteilten Datenbank (100), wobei die weitre Transaktion die Verknüpfung der ersten Identität des Benutzers mit der zweiten Identität aufhebt.

3. Vorrichtung (210, 230, 250, 260, 280) nach Anspruch 2, wobei die weitere Transaktion exklusiv durch einen oder mehrere als vertrauenswürdig eingestufte Benutzer der verteilten Datenbank (100) veranlassbar ist.

4. Vorrichtung (250, 260) zur Bereitstellung einer verteilten Datenbank (100), wobei die Vorrichtung (250, 260) ausgestaltet ist zum:
- für einen Benutzer der verteilten Datenbank (100), welcher eine erste Identität aufweist, Prüfen einer zweiten Identität; und
- Veranlassen einer Transaktion in der verteilten Datenbank (100), welche die erste Identität mit der zweiten Identität des Benutzers verknüpft.

5. Vorrichtung (250, 260) nach Anspruch 4,
wobei die Vorrichtung (250, 260) ausgestaltet ist zum:
- Veranlassen einer weiteren Transaktion in der verteilten Datenbank (100), wobei die weitere Transaktion die Verknüpfung der ersten Identität mit der zweiten Identität aufhebt.

6. Vorrichtung (250, 260) nach Anspruch 5,
wobei die weitere Transaktion exklusiv durch einen oder mehrere als vertrauenswürdig eingestufte Benutzer der verteilten Datenbank (100) veranlassbar ist.

7. Vorrichtung (210, 230, 250, 260, 280) nach einem der vorhergehenden Ansprüche,
wobei die erste Identität einen öffentlichen kryptographischen Schlüssel umfasst, welcher zum Signieren einer Transaktion in der verteilten Datenbank (100) nutzbar ist.

8. Vorrichtung (210, 230, 250, 260, 280) nach einem der vorhergehenden Ansprüche,
wobei über zweite Identität der Benutzer außerhalb der verteilten Datenbank (100) identifizierbar ist.

9. Vorrichtung (210, 230, 250, 260, 280) nach einem der vorhergehenden Ansprüche,
wobei die zweite Identität eine oder mehrere Informationen umfasst, welcher den Benutzer als natürliche Person, juristische Person, Organisation, Maschine oder physikalisches Objekt identifizieren.

10. Vorrichtung (210, 230, 250, 260, 280) nach einem der vorhergehenden Ansprüche,
wobei die Transaktion zur Verknüpfung der ersten Identität und der zweiten Identität exklusiv durch einen oder mehrere als vertrauenswürdig eingestuften Benutzer der verteilten Datenbank veranlassbar ist.

11. Verfahren, umfassend:
- für einen Benutzer einer verteilten Datenbank (100), welcher eine erste Identität aufweist, Speichern von Transaktionsdaten (120) einer Transaktion in der verteilten Datenbank (100),
wobei die Transaktion die erste Identität mit einer zweiten Identität verknüpft.

12. Verfahren nach Anspruch 11, umfassend:
- Speichern von Transaktionsdaten (120) wenigstens einer weiteren Transaktion in der verteilten Datenbank (100), wobei die weitere Transaktion die Verknüpfung der ersten Identität mit der zweiten Identität aufhebt.

13. Verfahren, umfassend:
- für einen Benutzer einer verteilten Datenbank (100), welcher eine erste Identität aufweist, Prüfen einer zweiten Identität; und
- Veranlassen einer Transaktion in der verteilten Datenbank (100), welche die erste Identität mit der zweiten Identität verknüpft.

14. Verfahren nach Anspruch 13, umfassend:
- Veranlassen einer weiteren Transaktion in der verteilten Datenbank (100), wobei die weitere Transaktion die Verknüpfung der ersten Identität mit der zweiten Identität aufhebt.

15. Computerprogramm, welches Programmcode umfasst der bei Ausführung durch einen oder mehrere Prozessoren (211, 231, 251, 261, 281) einer programmierbaren Vorrichtung (210, 230, 250, 260, 280) bewirkt, dass die Vorrichtung (210, 230, 250, 260, 280) ein Verfahren nach einem der Ansprüche 11 bis 14 ausführt.
